Europäisches Patentamt

**European Patent Office**

**Office européen des brevets**

(19)

(11) Publication number: **0 083 584**
**B1**

## (12) EUROPEAN PATENT SPECIFICATION

(45) Date of publication of patent specification: **03.09.86**

(51) Int. Cl.⁴: **G 03 H 3/00**

(21) Application number: **82900364.9**

(22) Date of filing: **08.02.82**

(86) International application number:
**PCT/FI82/00006**

(87) International publication number:
**WO 82/02781 19.08.82 Gazette 82/20**

(54) HOLOGRAPHIC B-SCAN IMAGING METHOD.

(30) Priority: **09.02.81 FI 810368**

(43) Date of publication of application:
**20.07.83 Bulletin 83/29**

(45) Publication of the grant of the patent:
**03.09.86 Bulletin 86/36**

(84) Designated Contracting States:
**DE FR GB**

(56) References cited:
**DE-A-2 352 672**
**DE-A-2 357 889**
**DE-B-2 644 338**
**FR-A-7 719 492**
**SE-B- 379 435**
**SE-B- 390 765**
**US-A-4 266 846**
**US-A-4 307 929**
**Journal of Physics: E Scientific Instruments
1975, vol. 8, no. 11, p. 885-894**

**"NDT International" (1979), pages 167-174
"Acoustical Holography", vol. 3, (1971), pages
333-348**

(73) Proprietor: **ALASAARELA, Esko**
**SF-91410 Jokirinne (FI)**

(72) Inventor: **ALASAARELA, Esko**
**SF-91410 Jokirinne (FI)**

(74) Representative: **Patentanwälte Dr. Solf & Zapf
Asamstrasse 8
D-8000 München 90 (DE)**

Courier Press, Leamington Spa, England.

## Description

This invention relates to an ultrasonic imaging method, wherein B-scan imaging and holographic imaging are performed in combinations, as it is stated in the precharacterizing portions of claims 1 and 3.

One of the greatest defects of B-scan imaging has been its poor lateral resolution, which limits image quality. In practice, e.g. in medical diagnosis, the need for a better ultrasonic imaging method has arisen.

In NDT International, August 1979, p. 167—174 a method is described, wherein a scanned ultrasonic transducer is used to obtain a B-scan type image and the ultrasonic signal is processed holographically. More in detail, the ultrasonic transducer scans a linear aperture using the holographic wide beam B-scan technique and echoes from a narrow depth slice of the object are selected by a time gate and recorded as an one dimensional hologram. This process is repeated until the full object depth has been covered. Each scan results in an one dimensional hologram corresponding to a known depth slice of the object. To form the holographic signal the echoes occurring in the time gate are multiplied by a phase reference. The lateral resolution advantages of holography are maintained along the direction of scan and the depth of each object is displayed directly as in conventional B-scan. With this method a point source phase reference is used. The images are reconstructed by performing a Fourier transform on each line hologram either optically or using a computer. Thus, the above method gives Fourier transforms of the object line-by-line.

In Acoustical holography, vol. 3, p. 333—348, Ed. A. F. Metherell, Plenum Press, New York/London, 1971 the holographic principle based on the so-called wave-front backward propagation image reconstruction method is disclosed. Since this publication, a wide range of different image processing methods and techniques for compensation of the errors caused by ultrasound propagation in nonhomogeneous media can be effectively employed.

The object underlying the invention is to provide an ultrasonic imaging method with good lateral and longitudinal resolution. This object is solved by the method as stated in claims 1 and 3. A specific advantageous modification of the method according to the invention is stated in claim 2.

In accordance with the method of claim 1 the object is first imaged using the conventional narrow-beam B-scan imaging method to achieve good longitudinal resolution, and then each depth of the object or distance from the transducer is imaged with the ultrasonic holographic method, provided with a numerical wavefront backward propagation reconstruction method to achieve good lateral resolution. These two images are combined by multiplication of the intensity values of each image point to achieve good resolution in both directions.

Alternatively, in accordance with the method of claim 3, both B-scan and holographic imagings are performed simultaneously. Thus, the object is illuminated by transmitting a wide-angle ultrasound burst from each hologram point, the amplitude and phase values of the reflected ultrasound echoes are measured as a function of travelling time within proper sampling intervals, and the image is then reconstructed from the measured amplitude and phase data by computer processing. For the reconstruction of the image the wavefront backward propagation method is used.

The invention advantageously combines the B-scan method and ultrasonic holography based on backward propagation reconstruction. It renders a good resolution both in the lateral and the longitudinal directions, which results from the good longitudinal resolution given by the B-scan imaging and from the good lateral resolution given by the holographic imaging of each depth. The image corresponds to that of the conventional B-scan image, but has better resolution.

The image reconstruction in accordance with the invention is performed as follows: The wavefront reflected from each depth of the object to the transducer are propagated backwards to their own places using numerical methods in a computer, the intensity pattern of the returned wavefront giving the respective image line. The backward propagation of the wavefront is done by determining the spatial frequency spectrum of the measured wavefront, by propagating the spectrum backward into the object to the depth involved, and by determining inversely the wavefront of the depth involved from the shifted spectrum. Using this reconstruction method a wide range of image filtering and error compensation processes can be supplied. The complex wavefields and their complex spectra both on the hologram plane and at each depth of the object are available.

The invention will now be described with reference to the drawings, wherein

Fig. 1 shows a typical B-scan imaging method,

Fig. 2 shows a simplified numerical reconstruction method based on the wavefront backward propagation, and

Fig. 3 shows the combination of B-scan imaging and holographic imaging.

The simplest ultrasonic imaging method is one-dimensional A-scan imaging. Ultrasonic pulses are sent into an object using a narrow beam transducer and reflected echoes are recorded as functions of the propagation time. A display shows two dimensions: the horizontal axis is proportional to the propagation delay time and therefore to the distance from the transducer and the vertical axis is proportional to the amplitude of the reflected echo.

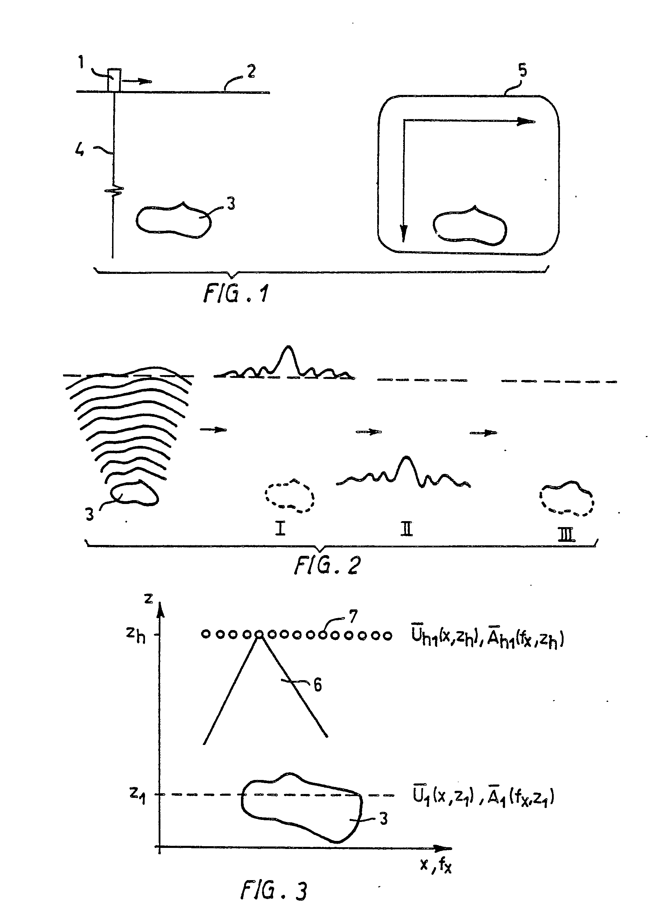

B-scan imaging is a two-dimensional imaging method. The ultrasonic system is like that in the A-scan system, but now the transducer 1 scans along a horizontal line 2 above the object 3 (Fig. 1). The ultrasound pulses are indicated by reference sign 4. The display 5 shows an image with its horizontal axis proportional to the position of the transducer 1 on the scanning line 2, its vertical axis proportional to the propagation delay time (or depth in the object), and the brightness of the display points proportional to the amplitudes of the echoes.

The longitudinal resolution of the B-scan method is determined by the pulse response of the transducer and the transmitter-receiver electronics. The lateral resolution is determined by the width of the ultrasonic beam penetrating into the object. This beam width is in turn determined by the diameter and focussing properties of the transducer, as well as by the ultrasonic wavelength and the imaging distance. Of course, the beam cannot be focused simultaneously at all distances from the transducer. Therefore the lateral resolution is good only near the focus distance and poorer at other distances.

If the holographic principle is used in the lateral direction the resolution is determined by the equation

$$\rho_h = \lambda(z_h - z_o)/a$$

where:
$\rho_h$ is the lateral resolution,
$\lambda$ is the ultrasonic wavelength,
a is the hologram aperture length, and
$z_h - z_o$ is the distance of the object plane from the hologram plane. (cf. B. P. Hildebrand and B. B. Brenden, An introduction to acoustical holography, Adam Hilder, p. 48, London, 1972).

Accordingly, it is possible to resolve two points at a distance of $\lambda$ from each other if the imaging depth is smaller than the hologram aperture.

One must pay attention to two important conditions when using the holographic principle. First, the ultrasonic beam transmitted from the transducer must be wide. In fact it must be able to illuminate the whole object from each point of the hologram plane if an optimum resolution is required. Thus, the transducer can be a wide-angle concave element or a small point-like element. In the latter case a multiplexing array is easily achieved.

The second condition is the requirement for the hologram plane to be flat. This is important because of the phase measurement required when the holographic principle is used. The hologram plane, e.q. the one-dimensional transducer array, must be flat within a fraction of the wavelength used.

Thus the imaging method of the invention combines the above described B-scan imaging and holographic imaging, which is based on the numerical computerized propagation of the measured wavefronts from the hologram plane to each object plan. This is a new imaging method, which has been named UHB imaging (ultrasonic holographic B-scan imaging).

There are several methods for combining the holographic principle and the B-scan imaging method. The simplest is described here first. In this method the imaging is performed twice. First, a conventional B-scan imaging is performed to give good longitudinal resolution. It is possible to optimize the longitudinal resolution properties by using pulse compressi techniques and matched filters. One-dimensional holographic imaging is then performed for each depth of the object (i.e. for each distance from the transducer). The depth coordinate can be controlled using a time-gating method (cf. B. P. Hildebrand and B. B. Brenden, An introduction to acoustical holography, Adam Hilger, London, p. 95—96, 1972) and by varying the reconstruction distance $z_h - z_o$ in the reconstruction process. Finally, these two images are combined by multiplying for example, to give a good resolution simultaneously in both directions.

The generation of holograms in optical holography is based on the well-known interference effect. An unknown object wavefront scattered by an object is allowed to interfere with another known reference wavefront. This results in an interference pattern which is the hologram of the object. By recording this interference pattern on photographic film one can store the three-dimensional pictorial information of the original object as a transparency function of the film. The information is included as an intensity pattern on the film and it consists of the amplitude and phase information of the scattered object wavefront. In ultrasonic holography the same information can be measured electronically. In this case the hologram consists of a number of amplitude and phase values measured on the points of the hologram plane. These are stored in the mass memory of a computer, if the numerical reconstruction method is used, as in the invention. The stored digital data include the complex information on the object wave, and therefore also the three-dimensional pictorial information on the object itself. Thus the image can be numerically reconstructed from the hologram data.

The numerical image reconstruction can be performed using the principle of wavefront backward propagation, as is done in the method of the invention. Since the wavefront propagates in a medium following known laws of physics, it can be numerically propagated from the hologram plane to the object plane. This is done by applying the so-called spectrum shift theorem to the space spectrum of the hologram (cf. J. W. Goodman, Introduction to Fourier optics, McGraw-Hill, New York, p. 49, 1968). This kind of numerical reconstruction method is presented in Fig. 2. The spatial frequency spectrum of the hologram (i.e. the wavefront) is calculated using the Fourier transform (Phase I). This spectrum is shifted to the plane of the original object by multiplying it by a phase factor (Phase II) and finally the wavefront on the object plane is calculated from the shifted spectrum using an inverse Fourier transform (Phase III). The result is the desired image line, which can be visualized on a television monitor, for example. By repeating this for each image line, the whole image appears on the monitor.

Fig. 3 presents this reconstruction process as applied to the imaging method of the invention. The transducer 7 consists of small wide beam elements on the hologram plane $z_h$. Plane $z_1$ of the object 3 has been chosen for consideration. The hologram data are measured by transmitting from each transducer element an ultrasound burst and by measuring the amplitude and phase of the echo reflected from the plane $z_1$. A time-gating method is used for selection of the echo involved, i.e. the measurement is made after a delay corresponding to the time period that the ultrasound travels forward and backward between $z_h$ and $z_1$.

The wavefront on the hologram plane reflected from the object plane $z_1$ (selected by the time-gating method) is

$$\overline{U}_{h1}(x,z_h)=U_{h1}(x,z_h)\ exp[j\emptyset_{h1}(x,z_h)].$$

where:
$\overline{U}_{h1}(x,z_h)$    is the wavefront reflected from the object plane $z_1$ to the hologram plane $z_h$,
$U_{h1}(x,z_h)$    is the amplitude of that wavefront,
$\emptyset_{h1}(x,z_h)$    is the phase of that wavefront,
$x$    is the position on the hologram, and
$j$    is the imaginary unit.

Its spatial frequency spectrum is calculated using a one-dimensional Fourier transform (cf. J. W. Goodman, ib.)

$$\overline{A}_{h1}(f_x,z_h)=F\{\overline{U}_{h1}(x,z_h)\}$$

where:
$\overline{A}_{h1}(f_x,z_h)$    is the spatial frequency spectrum of the $\overline{U}_{h1}(x,z_h)$ on the hologram plane $z_h$,
$F$    is the Fourier transform operator,
and
$f_x$    is the spatial frequency variable.

This spectrum is shifted to the object plane $z_1$ by multiplying it by the phase change factor:

$$exp[j\Delta\emptyset(f_x)]=exp[jk(z_h-z_1)\sqrt{1-(f_x)^2}]$$

where:
$k=2\pi/\lambda$    is the wave number, and
$\Delta\emptyset(f_x)$    is the required phase change when the spectrum is shifted from $z_h$ to $z_1$.

The shifted spectrum is obtained as follows:

$$\overline{A}_1(f_x,z_1)=\overline{A}_{h1}(f_x,z_h)\ exp[jk(z_h-z_1)\sqrt{1-(\lambda f_x)^2}].$$

The wavefront on the object plane $Z_1$ is obtained as the inverse Fourier transform of the shifted spectrum, or

$$\overline{U}_1(x,z_1)=F^{-1}\{\overline{A}_1(f_x,z_1)\}$$

where:
$\overline{U}_1(x,z_1)$    is the wavefront at the object plane $z_1$, and
$F^{-1}$    is the inverse Fourier transform operator.

The wavefronts reflected from other object planes are reconstructed in the same way to form images. This results in image lines which correspond to different depths of the object and whose intensities as the function of the position $x$ correspond to the intensities of the different image points.

The whole image is obtained by scanning the lines on the television monitor one after the other. The longitudinal resolution of holographic imaging is poor, so the obtained image is multiplied by the conventional B-scan image. Thus, an UHB-image is obtained with a good resolution in both longitudinal and lateral directions.

In practice, the process described above is produced as follows: The amplitude and phase of reflected ultrasound are measured by each transducer element at each object depth and stored in the memory of a computer. For example, if the number of transducer elements is 100 and image depth lines 100, hologram data of 10000 amplitude values and 10000 phase values are obtained. The computer calculates the Fourier transforms of the parts of the data which correspond to each depth line by using a FFT (fast Fourier transform) sub-program. The phase values of the obtained spectrum are multiplied by the phase factor presented above. Then the inverse Fourier transform is produced from the shifted spectrum data using an appropriate sub-program. The intensity is calculated from the resulting data by squaring the obtained amplitude values. In this way every image line is processed and the resulting image is multiplied point by point by another image produced with a conventional B-scan system.

The imaging process can be performed so that holographic imaging and B-scan imaging are produced simultaneously. In this case the object 3 (Fig. 3) is illuminated by transmitting short ultrasound bursts from each element of the transducer 7, by receiving the reflected ultrasound with the same element, and by measuring enough frequently the amplitude and phase values as a function of propagation time. By repeating this procedure with all transducer elements, data are obtained for reconstruction to an image in a computer by using a mathematic process. Suitable reconstruction processes have been developed for so-called SAR (synthetic aperture radar). The advantage of this method is the requirement of only one imaging procedure for producing the final image.

In both of the above imaging methods image filtering and compensating processes are advantageously used for compensating errors caused by the propagation of the wavefront in nonhomogeous media. These filtering and compensation processes can be applied to the wavefronts on the hologram and object planes and to their spectra.

**Claims**

1. An ultrasonic imaging method, which is a combination of the B-scan technique and of holography wherein an object (3) is imaged in each depth, i.e. in each distance from the transducer (7) by ultrasonic holographic imaging, characterized in that the object (3) is imaged using the conventional narrow-beam B-scan technique, that further said holographic imaging is performed, that for reconstructing the holographic image the wavefront backward propagation method is used, and that the holographic and the conventional B-scan images then are combined by multiplication of the intensity values of each image point.

2. An ultrasonic imaging method according to claim 1, characterized by image filtering or compensation processing for compensating the errors caused by the propagation of the ultrasonic wavefront in nonhomogeneous media.

3. An ultrasonic imaging method, wherein B-scan and holographic imaging is performed simultaneously, wherein a wide-angle ultrasonic burst is transmitted into the object (3) and the amplitude and the phase of the reflected echoes are measured for each hologram point, wherein the echoes are measured as a function of travelling time within proper sampling intervals, wherein for each sampling interval the image is reconstructed from the measured echo data by computer processing and wherein the images corresponding to the different sampling intervals, i.e. depths, are combined, characterized in that for the reconstruction of the image by computer processing the wavefront backward propagation method is used and that in the course of this processing image filtering or compensation processing for compensating the errors caused by the propagation of the ultrasonic wavefront in nonhomogeneous media is performed.

**Patentansprüche**

1. Abbildungsverfahren mit holografischer B-Abtastung unter Verwendung von Ultraschall, wobei ein Objekt (3) in jeder Tiefe, d.h. in jedem Abstand vom Signalumformer (7) mittels Ultraschall-Holografie abgebildet wird, dadurch gekennzeichnet, daß das Objekt (3) unter Verwendung der gewöhnlichen B-Abtastungstechnik mit schmalem Strahl abgebildet wird, daß weiter die holografische Abbildung durchgeführt wird, daß zur Rekonstruktion des holografischen Bildes das Verfahren mit der Rückwärtsausbreitung der Wellenfront verwendet wird, und daß dann die holografischen und die gewöhnlichen B-Abtastungsabbildungen mittels Multiplikation der Intensitätswerte jedes Abbildungspunktes kokbiniert werden.

2. Abbildungsverfahren nach Anspruch 1, gekennzeichnet durch ein Abbildungsfilter-verfahren oder durch ein Kompensations-verfahren, um die durch die Ausbreitung der Ultraschallwellenfront in inhomogenen Medien verursachten Fehler zu kompensieren.

3. Abbildungsverfahren mit gleichzeitiger B-Abtastung und holografischer Abtastung, wobei ein Weitwinkel - Ultraschallstoßsignal in ein Objekt (3) übertragen wird und die Amplitude und die Phase der reflektierten Echos für jeden Hologrammpunkt gemessen werden, wobei die Echos als eine Funktion der Ausbreitungszeit innerhalb geeigneter Prüfintervalle gemessen werden, wobei für jedes Prüfintervall die Abbildung von dem gemessenen Echowert mittels einer elektronischen Rechnereinheit rekonstruiert wird, und wobei die den verschiedenen Prüfintervallen entsprechenden Abbildungen, d.h. die Tiefen, kombiniert werden, dadurch gekennzeichnet, daß für die Rekonstruktion der Abbildung mittels der elektronischen Rechnereinheit das Verfahren der rückwärtigen Ausbreitung der Wellenfront verwendet wird, und daß während dieser Berechnung das Abbildungsfilterverfahren oder das Kompensationsverfahren zur Kompensation der durch die Ausbreitung der Ultraschallwellenfront in inhomogenen Medien verursachten Fehler durchgeführt wird.

**Revendications**

1. Procédé de mise en image ultrasonique, qui est une combinaison de la technique de balayage B et de l'holographie, dans lequel un objet (3) est mis en image à chaque profondeur, c'est-à-dire à chaque distance du transducteur (7), par mise en image par holographie ultrasonique, caractérisé en ce que l'objet (3) est mis en image en utilisant la technique conventionnelle de balayage B à faisceau étroit, qu'on effectue ensuite une mise en image holographique, qu'on utilise, pour reconstruire l'image holographique, la méthode de la rétro-propagation du front d'onde, et que l'image holographique et l'image conventionnelle par balayage B sont ensuite combinées par multiplication des valeurs d'intensité de chaque point d'image.

2. Procédé de mise en image selon la revendication 1, caractérisé en ce qu'on filtre l'image ou l'on effectue un traitement de compensation sur elle pour corriger les erreurs provoquées par la propagation du front d'onde ultrasonique dans des milieux non-homogènes.

3. Procédé de mise en image ultrasonique, dans lequel on effectue simultanément une mise en image par balayage B et par holographie, dans lequel on transmet dans l'objet (3) une rafale ultrasonique à grand angle et on mesure l'amplitude et la phase des échos réfléchis pour chaque point de l'hologramme, dans lequel les échos sont mesurés en tant que fonction du temps de parcours à l'intérieur d'intervalles d'échantillonnage appropriés, dans lequel, pour chaque intervalle d'échantillonnage, l'image est reconstruite par un ordinateur à partir des données d'échos mesurées et dans lequel on combine les images correspondant aux différents intervalles d'échantillonnage, c'est-à-dire aux profondeurs, caractérisé en ce qu'on utilise la méthode de la rétro-propagation du front d'onde pour la reconstruction de l'image par ordinateur et que, au cours de ce traitement par ordinateur, on filtre l'image ou l'on effectue sur elle un traitement de compensation pour corriger les erreurs provoquées par la propagation du front d'onde ultrasonique dans des milieux non-homogènes.

FIG.1

FIG.2

FIG.3